# EUROPÄISCHE PATENTSCHRIFT

(11) **EP 1 448 422 B1**
(45) Veröffentlichungstag und Bekanntmachung des Hinweises auf die Patenterteilung: **01.06.2005**
(21) Anmeldenummer: 02802648.2
(22) Anmeldetag: 06.11.2002
(51) Int. Cl.: B61H 7/08

(54) **MAGNETSPULENANORDNUNG FÜR SCHIENENFAHRZEUGE ZUR VERBESSERUNG DER TRAKTION**
MAGNET COIL ASSEMBLY FOR RAIL VEHICLES PROVIDED FOR INCREASING THE TRACTION
ENSEMBLE DE BOBINES D'ELECTRO-AIMANT POUR VEHICULES SUR RAILS PERMETTANT D'AMELIORER LA TRACTION

(30) Priorität: 08.11.2001 DE 10154775
(43) Veröffentlichungstag der Anmeldung: 25.08.2004
(73) Patentinhaber: KNORR-BREMSE Systeme für Schienenfahrzeuge GmbH, 80809 München (DE)
(72) Erfinder: KRÖGER, Uwe, 80993 München (DE); GRAUTSTÜCK, Heinrich, 80993 München (DE); BINDER, Andreas, 64560 Riedstadt-Goddelau (DE); HOFMANN, Martina, 1070 Wien (AT); WERLE, Thomas, 69469 Weinheim (DE)
(74) Vertreter: Schönmann, Kurt, Dr.
(86) Internationale Anmeldenummer: PCT/EP2002/012365
(87) Internationale Veröffentlichungsnummer: WO 2003/040539

(56) Entgegenhaltungen:
- EP-A- 0 724 998
- GB-A- 1 454 006
- US-A- 6 041 897

## Beschreibung

Die vorliegende Erfindung betrifft eine Magnetspulenanordnung gemäß dem Oberbegriff des Patentanspruches 1.

Moderne Schienenfahrzeuge sind üblicherweise zusätzlich zu einer elektropneumatischen Bremsanlage mit einer Wirbelstrombremse ausgestattet. Aus "Bremsen für Schienenfahrzeuge, Handbuch, Bremstechnische Begriffe und Werte, Knorr-Bremse AG, München, 1990" ist eine sog. lineare Wirbelstrombremse bekannt. Diese Wirbelstrombremse besteht aus einem Eisenjoch und mehreren in Fahrtrichtung hintereinander in einem Abstand von der Schienenoberseite angeordneten Polkernen. Elektrische Magnetfeldspulen erregen die Polkerne so, daß "alternierend", d.h. abwechselnd hintereinander liegende magnetische Nord- und Südpole entstehen. Bei eingeschalteter Wirbelstrombremse werden bei einer Relativbewegung der Wirbelstrombremse gegenüber der Schiene aufgrund der zeitlichen Änderungen des magnetischen Flusses Wirbelströme induziert. Die Wirbelströme erzeugen ein sekundäres Magnetfeld, das dem Magnetfeld der Wirbelstrombremse entgegengerichtet ist. Hieraus ergibt sich eine der Fahrtrichtung entgegengesetzt wirkende horizontale Bremskraft. Eine Wirbelstrombremse ist somit unabhängig vom Haftwert zwischen Rad und Schiene und arbeitet praktisch verschleißfrei. Eine derartige Bremse ist auch aus der Patentanmeldung EP 0 724 998 A1 bekannt.

Aus anmelderinternem Stand der Technik sind Wirbelstrombremsen bekannt, die mit Gleichstrom gespeist werden und bei denen die Polspulen eines "Bremsmagneten" in Reihe geschaltet sind. Bekannt sind ferner Ausführungen mit paralleler Polspulenverschaltung. Bremsmagnete werden sowohl in Triebdrehgestellen, d.h. in Drehgestellen mit angetriebenen Achsen, als auch in Laufdrehgestellen eingebaut.

Untersuchungen von Wirbelstrommaschinen mit mehrphasigem Drehstrom scheiterten bisher an dem für die Bremsmagneten zur Verfügung stehenden begrenzten Einbauraum, an der benötigten großen Blindleistung und der aufwendigen Magnettechnologie, insbesondere den erforderlichen geblechten Kernen, Traversen, zwangsgekühlten Hohlleitern etc.

Die heute bekannte und beispielsweise im ICE 3 eingesetzte durch eine Magnetspulenanordnung gebildete lineare Wirbelstrombremse bremst verschleißfrei und kraftschlußunabhängig nur über Magnetfelder. Diese Bremse ist aber relativ schwer und teuer.

Aufgabe der Erfindung ist es, eine vielseitig einsetzbare Magnetspulenanordnung für Schienenfahrzeuge zu schaffen.

Diese Aufgabe wird durch die Merkmale des Patentanspruches 1 gelöst.

Vorteilhafte Ausgestaltungen und Weiterbildungen der Erfindung sind den Unteransprüchen zu entnehmen.

Das Grundprinzip der Erfindung besteht in einer Magnetspulenanordnung, mit mehreren in Fahrtrichtung hintereinander angeordneten Magnetspulen, die im Zustand "Fahren" gruppenweise gleichgeschaltet sind. "Gruppenweises Gleichschalten" bedeutet, daß die Orientierung der Magnetfelder mehrerer in Fahrtrichtung aufeinanderfolgender Spulen gleich ist.

Durch die "Spulengruppen" entsteht eine starke Anziehungskraft, d.h. die Räder werden zusätzlich durch Magnetkräfte auf die Schiene gepreßt. Hierdurch verbessert sich die Traktion, was insbesondere beim Anfahren an einer Steigung bzw. beim Beschleunigen oder beim Fahren unter schlechten Kraftschlußverhältnissen von Vorteil ist. Des weiteren verbessert sich bei Fahrten mit starkem Seitenwind die Kippstabilität.

Vorzugsweise ist die "Wirbelstrommaschine" gemäß der Erfindung in den führenden Triebköpfen oder Triebwagen, den Steuerwagen und/oder in den Lokdrehgestellen eingebaut.

Nach einer Weiterbildung der Erfindung sind die Magnetspulen zwischen zwei Zuständen umschaltbar, nämlich dem oben erläuterten "Traktionszustand" und einem "Bremszustand".

Im Traktionszustand sind die Spulen - wie oben erläutert - gruppenweise geschaltet, wobei beispielsweise immer drei aufeinanderfolgende Spulen gleichgeschaltet sind. Aufgrund der bei der gruppenweisen Schaltung großen "Polteilung" und dem in Schienenrichtung kontinuierlich anwachsenden Magnetfeld können sich nur geringe Wirbelströme und somit nur eine geringe Bremskraft ausbilden. Somit ergeben sich bei sehr kleinen Bremskräften hohe Anzugskräfte. Durch die bei der gruppenweisen Schaltung vergleichsweise geringen Magnetströme werden in der Fahrphase die Polspulen thermisch nur sehr gering belastet.

Demgegenüber sind im "Bremszustand" die Magnetspulen alternierend gestaltet, d.h. die Magnetfeldorientierung wechselt in Fahrtrichtung von Spule zu Spule. Bei der alternierenden Schaltung entstehen in der Schiene starke Wirbelströme, was zu hohen Bremskräften führt.

Für den Einsatzfall des Anfahrens ist eine Polumschaltung aufgrund der natürlichen Kennlinien nicht erforderlich, da bei einer Geschwindigkeit von Null keine Bremskräfte entstehen.

Im folgenden wird die Erfindung anhand eines Ausführungsbeispieles im Zusammenhang mit der Zeichnung näher erläutert.

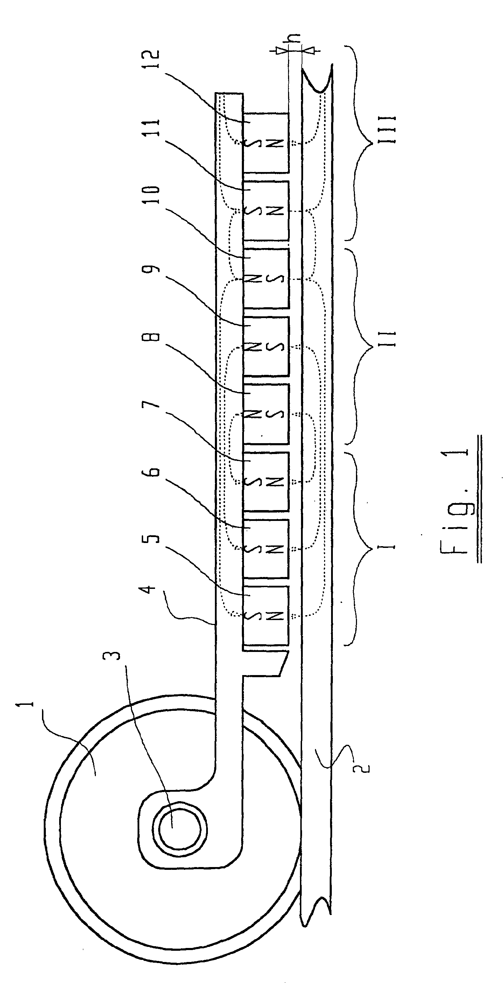

Die einzige Fig. 1 zeigt schematisch eine Magnetspulenanordnung gemäß der Erfindung.

Fig. 1 zeigt ein Schienenfahrzeug im Bereich eines Drehgestells, von dem hier nur ein Rad 1 dargestellt ist, das auf einer Schiene 2 läuft. An einer Achse 3 des Rades 1 ist ein Tragarm 4 befestigt. An der Unterseite des Tragarmes 4 sind in einem Abstand h über der Oberseite der Schiene 2 mehrere Magnetspulen 5-12 in Fahrtrichtung hintereinander angeordnet.

Hinsichtlich ihres Schaltzustandes lassen sich die Magnetspulen in Gruppen I, II, III unterteilen. Bei den Gruppen I, III liegen die Nordpole unten, d.h. sie sind der Schienenoberseite zugewandt. Bei den Magnetspulen der Gruppe II hingegen ist der Südpol der Schienenoberseite zugewandt.

In der Schiene 2 und im Tragarm 4 stellen sich Magnetfeldverläufe ein, die hier durch gestrichelt dargestellte Magnetfeldlinien angedeutet sind.

Durch die durch die Magnetfeldspulen 5-12 erzeugten Magnetfelder entsteht zwischen dem Tragarm 4 bzw. dem Rad 1 und der Schiene 2 eine starke vertikal gerichtete Anpreßkraft.

Wesentlich hierbei ist, daß im Unterschied zu einer alternierenden Schaltung der Spulen bei einer Bewegung des Schienenfahrzeugs, d.h. der Spulen 5-12 relativ zur Schiene 2, in der Schiene 2 und im Tragarm 4 nur relativ geringe Wirbelströme entstehen. Somit ist bei der hier gezeigten gruppenweisen Schaltung der Spulen 5-12 die magnetische Bremskraft gering.

Aufgrund der hohen Anziehungskraft wird eine gute Traktion zwischen dem Rad 1 und der Schiene 2 erreicht, was insbesondere beim Anfahren an einer Steigung und bei schlechten Kraftschlußverhältnissen von Vorteil ist.

Zusammenfassend werden mit der Erfindung im wesentlichen folgende Vorteile erreicht:
- Die lineare Wirbelstrommaschine wirkt bei uneingeschränkter Bremsfunktion in der Betriebsart "Traktion" unterstützend.
- Anfahrzeiten werden reduziert, da durch die zusätzlichen magnetischen Anzugskräfte, insbesondere bei schlechten Kraftschlußbedingungen, beispielsweise bei nassen Schienen, die Traktionsleistung unvermindert aufgeschaltet werden kann, ohne daß die Räder durchdrehen. Die Erfindung eignet sich somit insbesondere für Lokomotiven von Güterzügen. Durch Umschalten in den Schaltzustand "Bremsen" ist mit der Wirbelstrommaschine verschleißfreie und haftwertunabhängige Bremsung möglich, wodurch die anderen Bremssysteme geschont werden können.
- Die lineare Wirbelstrommaschine ist nicht nur für den Hochgeschwindigkeitsverkehr, sondern auch bis Geschwindigkeiten von 140 bis 160 km/h gut geeignet.
- An Streckensteigungen mit geringem Kraftschluß kann leichter und sicherer angefahren und die Fahrgeschwindigkeit schneller gesteigert werden.
- Es wird ein geringer Verschleiß erreicht, was die Lebenszykluskosten senkt.
- Züge mit einem leichten Steuer- oder Triebwagen können mit Hilfe der zusätzlichen magnetischen Anzugskraft auch bei starkem Seitenwind uneingeschränkt schnell fahren, wodurch sich die Entgleisungssicherheit erhöht und die Fahrtzeit verkürzt.
- Die lineare Wirbelstrommaschine gemäß der Erfindung ist universell bei einer Vielzahl von Fahrzeugtypen einsetzbar.

## Patentansprüche

1. Magnetspulenanordnung für Schienenfahrzeuge mit Magnetspulen zur Erzeugung von Magnetfeldern, wobei die Magnetspulen in Fahrtrichtung hintereinander in einem Abstand von der Schienenoberseite am Schienenfahrzeug angeordnet sind, **dadurch gekennzeichnet,**
**daß** die Magnetspulen (5-12) so geschaltet sind, daß die Magnetfelder mehrerer in Fahrtrichtung aufeinanderfolgender Magnetspulen (5-12) die gleiche Orientierung haben.

2. Magnetspulenanordnung nach Anspruch 1, **dadurch gekennzeichnet,**
**daß** mindestens zwei Gruppen (I, II, III) mit jeweils mindestens zwei gleichgeschalteten Magnetspulen (5-7; 8-10) vorgesehen sind.

3. Magnetspulenanordnung nach einem der Ansprüche 1 oder 2, **dadurch gekennzeichnet,**
**daß** die Magnetspulen (5-12) in einen Zustand umschaltbar sind, bei dem die Magnetfeldrichtung in Fahrtrichtung aufeinanderfolgender Magnetspulen (5-12) von Spule zu Spule wechselt.

4. Magnetspulenanordnung nach einem der Ansprüche 1 bis 3, **dadurch gekennzeichnet,**
**daß** die Magnetspulen (5-12) unmittelbar über den Schienen (2) angeordnet sind, wobei die Nord-Süd-Richtung der Magnetspulen (5-12) ortogonal zur Fahrtrichtung ist.

## Claims

1. Solenoid unit for rail vehicles including solenoids for generating magnetic fields, wherein the solenoids are arranged in succession, along the travelling direction, at a spacing from the upper rail side on the rail vehicle,
**characterised in**
**that** said solenoids (5 - 12) are so connected that the magnetic fields of several solenoids (5 - 12) in succession along the travelling direction present the same orientation.

2. Solenoid unit according to Claim 1, **characterised in**
**that** at least two groups (I, II, III), each with at least two solenoids (5 - 7; 8 - 10), are provided which are connected in the same sense.

3. Solenoid unit according to any of the Claims 1 or 2, **characterised in**
**that** said solenoids (5 - 12) are adapted for being changed over into a state in which the orientation of the magnetic field in the travelling direction of successive solenoids varies from one coil to the next.

4. Solenoid unit according to any of the Claims 1 to 3, **characterised in**
**that** said solenoids (5 - 12) are disposed directly above the rails (2), with the north-south orientation of said solenoids (5 - 12) being orthogonal on the travelling direction.

## Revendications

1. Ensemble de bobines d'électro-aimants pour véhicules sur rails comportant des bobines d'électro-aimants pour produire des champs magnétiques, les bobines d'électro-aimants étant disposées sur le véhicule sur rails les unes à la suite des autres dans la direction de marche, à distance de la face supérieure du rail,
**caractérisé en ce que** les bobines (5-12) d'électro-aimants sont connectées de telle sorte que les champs magnétiques de plusieurs bobines (5-12) d'électro-aimants qui se succèdent dans la direction de marche possèdent la même orientation.

2. Ensemble de bobines d'électro-aimants suivant la revendication 1, **caractérisé en ce qu'**il est prévu au moins deux groupes (I, II, III) comportant chacun au moins deux bobines (5-7 ; 8-10) d'électro-aimants connectés dans le même sens.

3. Ensemble de bobines d'électro-aimants suivant la revendication 1 ou 2, **caractérisé en ce que** les bobines (5-12) d'électro-aimants peuvent être commutés dans un état dans lequel le sens du champ magnétique de bobines (5-12) d'électro-aimants qui se succèdent dans la direction de marche change d'une bobine à l'autre.

4. Ensemble de bobines d'électro-aimants suivant l'une des revendications 1 à 3, **caractérisé en ce que** les bobines (5-12) d'électro-aimants sont disposés immédiatement au-dessus des rails (2), la direction nord-sud des bobines (5-12) d'électro-aimants étant orthogonale à la direction de marche.
